# EUROPEAN PATENT APPLICATION

(11) **EP 4 745 846 A1**
(43) Date of publication of application: **20.05.2026**
(21) Application number: 24213923.6
(22) Date of filing: 19.11.2024
(51) Int. Cl.: G06N 3/09

(54) **METHOD, DEVICE AND COMPUTER PROGRAM FOR TRAINING AND USING AN ALIGNMENT COMPONENT**

(71) Applicant: Aleph Alpha GmbH, 69115 Heidelberg (DE)
(72) Inventor: Baldock, Robert, 69115 Heidelberg (DE)
(74) Representative: Bardehle Pagenberg Partnerschaft mbB Patentanwälte Rechtsanwälte

(57) **Abstract**

The current disclosure generally relates to a computer-implemented method for training an alignment component to align the output of a machine learning model comprising the steps of: obtaining training data based on an output from the machine learning model; labeling one or more neighbors of a neighborhood set for a sample of the training data using the alignment component with regards to the correctness of each of the one or more neighbors; generating, based on the sample and the labeled one or more neighbors, aligned output information using the machine learning model; and updating the alignment component based on the sample, the labeled neighbors and the aligned output information. The disclosure further relates to a computer-implemented method for using a machine learning model and an alignment component to align the output of the machine learning model. Finally, the disclosure relates to a corresponding alignment component, device, system and computer program.

## Description

### Technical field

The present disclosure relates to a computer-implemented method for training an alignment component to align the output of a machine learning model and a computer-implemented method for using a machine learning model and an alignment component to align the output of the machine learning model as well as to a corresponding alignment component, device, system and computer program.

### Technical background

Large Language Models (LLMs) often fail to align with user intentions, generating content that may be harmful, misleading, or simply irrelevant. This misalignment arises because LLMs are typically trained on datasets from the internet, reflecting a wide array of human behaviors and biases.

Model alignment is the process of steering LLMs so that their outputs are more consistent with desired behaviors. Alignment can be distinguished from the regular training process in that the goal that alignment optimizes for (i.e., meeting human expectation of an output) is not well-defined and subject to change. For example, when training a machine learning model that distinguishes images of a cat from images of a dog, each training data sample includes the image of either a cat or a dog and a clear label stating whether that image shows a cat or a dog. There is no ambiguity as to what is a cat and what is a dog. The definition of what is a cat and what is a dog is also not changing over time. On the contrary, when aligning a machine learning model, the goal is to match the output of the model with the output that is expected by a human. Compared to the task of distinguishing cats form dogs, human expectations are anything but clearly defined. The output that is expected from a machine learning model may differ widely between various humans. For example, expectations may vary between different age groups or cultures. Moreover, in contrast to the cat-and-dog-example, human expectations may change over time. An output of a machine learning model that once met human expectations may not meet those expectations at a later point in time.

Fine-tuning is a critical technique in aligning LLMs with human preferences, with two prominent methods being Reinforcement Learning from Human Feedback (RLHF) and Direct Preference Optimization (DPO). RLHF refines LLM behavior by incorporating human feedback through a reward model and fine-tuning the model using algorithms such as Proximal Policy Optimization (PPO). More specifically, the reward model assigns higher scores to outputs that are aligned with human preferences. The machine learning model is then optimized, using for example PPO, to generated responses that maximize the reward. DPO improves stability and computational efficiency over RLHF by directly fine-tuning the LLM based on human preferences, using a classification loss. In contrast to RLHF, DPO eliminates the need for a reward model and directly optimizes the machine learning model to generate output that is more aligned with the preferences.

The above-mentioned conventional methods can lead to several disadvantages. First, the process often results in performance regressions on public natural language processing datasets, indicating an *"alignment tax"* where alignment efforts might degrade the model's original capabilities. Second, fine-tuned models can still produce harmful outputs, e.g., through *"jailbreaks"* such as adversarial system messages, stressing the need for further deployment-time safety techniques. Third, the process is poorly controlled - bespoke datasets are required to create models aligned to different users, and collecting those datasets is an expensive, slow process of trial and error. A further disadvantage of model alignment using conventional methods is that the data required for bespoke alignment for different users is slow and expensive. This problem amplifies when aiming for adaptable alignment according to different users with varying preferences and needs. Each user's unique requirements would require a repeated, resource-heavy data-collection and finetuning processes.

Against this background, an object of the present disclosure is to address one or more or all of the above-mentioned disadvantages.

### Summary of the invention

The above-mentioned objects and other objects, which become apparent from the following description, are solved by the subject-matter of the independent claims. Preferred embodiments are subject of the dependent claims.

A 1^{st} embodiment of the invention is directed to a computer-implemented method for training an alignment component to align the output of a machine learning model, comprising the steps of: obtaining training data based on an output from the machine learning model; labeling one or more neighbors of a neighborhood set for a sample of the training data using the alignment component with regards to the correctness of each of the one or more neighbors; generating, based on the sample and the labeled one or more neighbors, aligned output information using the machine learning model; and updating the alignment component based on the sample, the labeled neighbors and the aligned output information.

A computer-implemented method for training an alignment component to align the output of a machine learning model, may have the advantage of improving the results of the machine learning model. Moreover, training an alignment component to align the output of a machine learning model may require less computational resources than aligning the output of the machine learning model using conventional methods.

Obtaining training data based on an output from the machine learning model may have the advantage of calibrating the alignment component to the machine learning model. Labeling one or more neighbors of a neighborhood set for a sample of the training data using the alignment component with regards to the correctness of each of the one or more neighbors may have the advantage of indicating the correctness of one or more neighbors. Generating, based on the sample and the labeled one or more neighbors, aligned output information using the machine learning model may have the advantage of improving the generated output information. Updating the alignment component based on the sample, the labeled neighbors and the aligned output information may provide the advantage of training the alignment component.

According to a 2^{nd} embodiment embedding the sample into an embedding space using the alignment component; embedding each neighbor of the neighborhood set into the embedding space using the alignment component; and selecting one or more neighbors to be labelled.

Embedding the sample into an embedding space using the alignment component may have the advantage of representing complex information (i.e., the sample) in a format (i.e., embedded sample) that is better suitable for being processed in the subsequent steps. Using embedding to represent the sample may also require less computational resources than using conventional methods such as one-hot encoding for representing the sample. More specifically, embedding may lead to a compact representation of the sample which reduces memory and storage requirements.

Embedding may also improve the overall results of the training process, for example by reducing overfitting by forcing the alignment component to capture patterns and relationships inherent in the sample in the representation.

Embedding each neighbor of the neighborhood set into the embedding space using the alignment component may have the same advantages as mentioned with regards to embedding the sample. In other words, embedding each neighbor may also require less computational resources and improve the training results.

Selecting one or more neighbors to be labelled may have the advantage of reducing the overall number of neighbors that are being labeled. Accordingly, selecting one or more neighbors to be labelled may save computational resources such as processing time and storage space. For example, due to the reduced number of neighbors that require labeling, less processing time is required. The same applies to storage space. Since less labels are generated, there is also less storage space required for saving the total number of labels created. Finally, selecting one or more neighbors to be labelled may also have the advantage of focusing on the most important neighbors and lead to an improved training result.

According to a 3^{rd} embodiment iteratively repeating the sample embedding, neighbor embedding, selecting, labeling, generating, and updating, wherein the neighbor embedding is preferably not performed during each iteration.

Iteratively repeating the sample embedding, neighbor embedding, selecting, labeling, generating, and updating may have the advantage of iteratively improving the alignment component. Due to its adaptability and flexibility, iterative improvement may be advantageous in complex learning environment. Iterative improvement may have the advantage of the advantage of converging towards an optimal solution. An iterative approach may also be advantages with regards to error detection and correction. More specifically, the results may be controlled and adjusted during the training process which may lead to an improved overall outcome.

The neighbor embedding not being performed during each iteration may save computational resources, in particular, processing power. Performing the neighbor embedding during each iteration may incrementally improve the training results. However, the incremental improvement may require a large amount of additional computational resources that is used for the neighbor embedding. Accordingly, not performing the neighbor embedding during each iteration may provide an advantageous trade off between training result and use of computational resources.

According to a 4^{th} embodiment the iteratively repeating is stopped when a predefined number of runs as has been reached; or wherein the iteratively repeating is stopped when a predefined number of neighbors are positive.

Stopping the iteratively repeating when a predefined number of runs as has been reached may have the advantage of using less computational resources while maintaining suitable training results. Using a predefined number of runs to determine the stopping point may be advantageous due to its simplicity. The simplicity of this approach also saves computational resources since there is no complex process of determining when to stop.

Stopping the iteratively repeating when a predefined number of neighbors are positive may also have the advantage of using less computational resources while maintaining suitable training results. Stopping at a predefined number of neighbors may be more complex than stopping at a predefined number of runs, however, this approach may be more accurate and thus save resources by determining a more accurate stopping point.

According to a 5^{th} embodiment each of the one or more neighbors is labelled as positive or negative.

Labeling each of the one or more neighbors as positive or negative may have the advantage of being able to distinguish between a wanted outcome and an unwanted outcome in a discrete and binary manner. Labeling the one or more neighbors in such a manner may require less memory and storage space. Processing the binary labels may also require less processing power when compared to using other labeling methods such as a scale from o to 100.

According to a 6^{th} embodiment each neighbor is a data point that lies in the proximity of the sample.

Each neighbor being a data point that lies in the proximity of the sample may have the advantage of considering data points that are similar to the sample. This is in line with the overall concept of alignment. It may also require less computational resources due to the closeness of the data points.

According to a 7^{th} embodiment wherein obtaining training data comprises: obtaining text information; splitting the text information into a plurality of training samples, comprising input and ideal output information; generating, based on the input information and using the machine learning model, generated output information; wherein the training data comprises the input information, the ideal output information and the generated output information.

Obtaining text information and splitting the text information into a plurality of training samples, comprising input and ideal output information may provide the advantage of creating multiple samples based on the text information. Moreover, splitting the text information may improve the generalization of the model since the resulting samples may provide a wider variety of structures and contexts. Splitting the text may also decrease the size of the sample and thus decrease the computational complexity of processing the samples. Splitting may also enable training on a more granular level.

Generating, based on the input information and using the machine learning model, generated output information may have the advantage of generating a training data set that is specific to the machine learning model used for generating the output information. This specificity may improve the results of the training process and may lead to increased performance during the inference process.

According to an 8^{th} embodiment filtering the obtained training data based on the quality of the generated output information.

Filtering the obtained training data based on the quality of the generated output information may have the advantage of improving training data set. More specifically, filtering based on the quality of the generated output information may improve reliability and generalization during the training process. Filtering based on the quality of the generated output information may also reduce noise. Moreover, quality-based filtering may reduce the need for more complex models.

A 9^{th} embodiment of the invention is directed to a computer-implemented method for using a machine learning model and an alignment component to align the output of the machine learning model, wherein the alignment component has been trained according to the method of any one of the preceding embodiments, the method comprising: receiving output from the machine learning model; aligning, using the alignment component and the machine learning model, the output of the machine learning model.

A computer-implemented method for using a machine learning model and an alignment component to align the output of the machine learning model, wherein the alignment component has been trained according to the method of any one of the preceding embodiments may have the advantage of increasing the quality of the output of the machine learning model. The method may also require less computational resources compared to conventional alignment methods.

According to a 10^{th} embodiment aligning comprises labeling each neighbor of the neighborhood set once.

Aligning comprising labeling each neighbor of the neighborhood set once may have the advantage of fixing the labeling for each neighbor. This may provide the advantage of hardcoding user specific preference into the alignment component. Moreover, labeling each neighbor of the neighborhood set once may save computational resources compared to labeling one or more neighbors of the neighborhood during prediction or similar approaches.

According to a 11^{th} embodiment the labeling is based on clustering and/or wherein the labeling is based on a questionnaire.

Basing the labeling on clustering and/or basing the labeling may have the advantage of systematically labeling each neighbor of the neighborhood set. This may reduce the complexity of the labeling, save computational resources and improve overall results. Using clustering to label each neighbor may enable the detection and incorporation of underlying patterns. Using a questionnaire to label each neighbor may improve the incorporation of a user's preferences.

According to a 12^{th} embodiment inputting information into the machine learning model; generating, based on the inputting, output information wherein the output information is aligned according to the methods of any one of embodiments 9 to 11.

A 13^{th} embodiment of the invention is directed to an alignment component which has been trained according to the methods of any one of embodiments 1 to 8.

A 14^{th} embodiment of the invention is directed to a device or system comprising means for performing the methods of any one of embodiments 1 to 12.

A 15^{th} embodiment of the invention is directed to a computer program comprising instructions which, when the program is executed by a computer, cause the computer to carry out the methods of any one of embodiments 1 to 12.

### Brief description of the figures

Various aspects of the present invention are described in more detail in the following by reference to the accompanying figures without the present disclosure being limited to the embodiments of these figures.
- Fig. 1: illustrates an exemplary alignment scenario an a high-level according to an embodiment of the present invention;
- Fig. 2: illustrates an exemplary alignment scenario on a more granular level according to an embodiment of the present invention;
- Fig. 3: illustrates the functionality of an alignment component according to an embodiment of the present invention ;
- Fig. 4: illustrates a process of generating training data according to an embodiment of the present invention;
- Fig. 5: illustrates an example computing device that may be used in some embodiments to implement features described herein;
- Fig. 6: illustrates a flow diagram showing a computer-implemented method for training an alignment component and a computer-implemented method for using the trained alignment component according to an embodiment of the present disclosure.

### Detailed description of preferred embodiments

In the following, the invention is described with reference to the accompanying figures in more detail. However, the present invention can also be used in other embodiments not explicitly disclosed hereafter. As detailed below, the embodiments are compatible with each other, and individual features of one embodiment may also be applied to another embodiment.

Throughout the figures and description, the same reference numerals refer to the same elements, unless stated otherwise. The figures may not be drawn to scale, and the relative size, proportions, and depiction of elements in the figures may be exaggerated for the purpose of clarity, illustration, and convenience. The figures do not limit the scope of the claims but merely support the understanding of the invention.

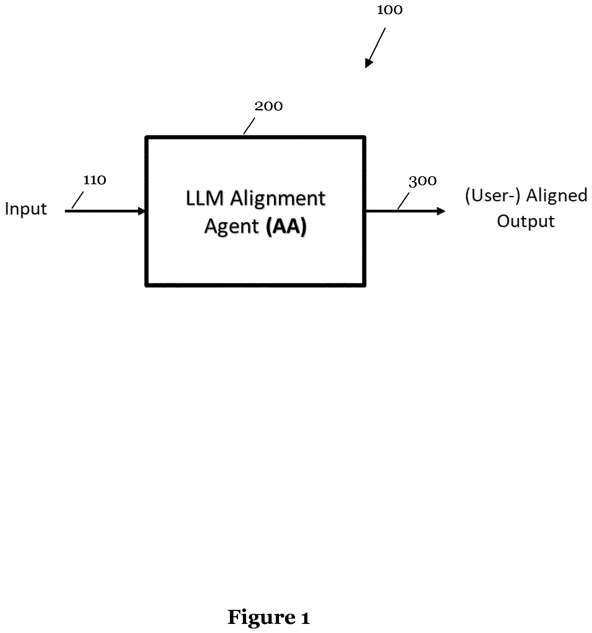

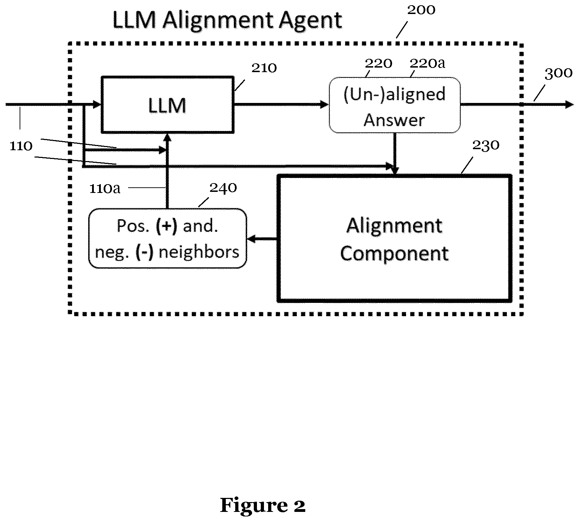

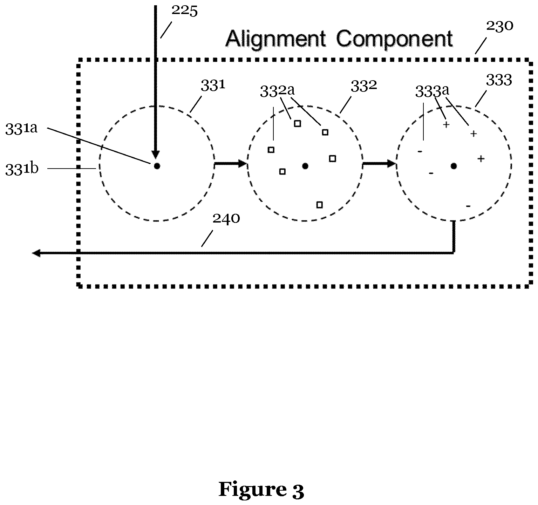

**Figure 1** illustrates an example of an alignment scenario 100. In the alignment scenario 100, an input 110 is provided to the machine learning alignment agent 200. The aim of the ML alignment agent 200 is to align the input 110 with the output that is expected by the user of the ML alignment agent 200 to create user aligned output 300. The machine learning model may be a large language model that generates general-purpose text. Figure 2 and Figure 3 discuss the inner workings of the ML alignment agent 200 in more detail.

**Figure 2** illustrates the inner workings of the ML alignment agent 200. It shows that the ML alignment agent 200 may comprise a machine learning model 210, preferably a large language model that may be responsible for generating an output 300 based on an input 110. In early iterations the machine learning model may generated unaligned output 220. In other words, an output that does not match the output that is expected by the user of the machine learning model.

In order to align the unaligned output 220, the input 110 and the unaligned output 220 may be provided to an alignment component 230. The aim of the alignment component may be to generate instructive examples 240 of what constitutes a well-aligned output and what constitutes a misaligned output. Positive examples may represent pairs of input and output in which the user's expectations match the output that is generated by the machine learning model (i.e., well-aligned). Negative examples may represent pairs of input and output in which the user's expectations do not match the output that is generated by the machine learning model (i.e., misaligned).

In a subsequent step, those instructive examples 240 may be used to generate an updated input 110a. The instructive examples 240 may be appended to the input 110 by specifying *"act more like this"* followed by positive examples and *"act less like this"* followed by negative examples. The machine learning model 210 may then use the updated input 110a to generate a more aligned output 220a. The more aligned output 220a may be regarded as well-aligned and serve as an output 300 of the model or it may be fed into the alignment component 230 for further aligning. Note that during the training process, the original input 110 may also be provided to the alignment component 230 at this stage. Accordingly, the steps of generating output, generating instructive examples, updating the input information and generating a new output may be repeated several times before an output 300 is provided to the user. The steps may be repeated until a stop condition is reached. This stop condition may be a maximal number of repetitions (e.g., 3 repetitions). The stop condition may also be a value (e.g., 90%) at which most neighbors are estimated to be positive examples.

For example, a user may provide the input 110 *"What are the benefits of drinking water?".* Based on this input 110, the machine learning model 210, may generated misaligned output information 220 which is provided to the alignment component 230 to generate positive examples and negative examples 240. A positive example in this scenario may be *"Drinking water is essential for maintaining good health. It helps keep your body hydrated, which is important for all your body's cells, tissues, and organs. Water helps regulate body temperature, aids in digestion, and assists* in *nutrient absorption.".* A negative in this scenario may be *"Water is wet and you need it to live. Some people drink a lot of water, but you don't have to if you don't want to. Just drink when you feel thirsty.".* The input 110 and the instructive examples 240 are then used to create an updated input 110a which may look as follow *"What are the benefits of drinking water? Act more like this: Drinking water is essential for maintaining good health. It helps keep your body hydrated, which is important for all your body's cells, tissues, and organs. Water helps regulate body temperature, aids in digestion, and assists in nutrient absorption.* Act less like this: *Water is wet and you need it to live. Some people drink a lot of water, but you don't have to if you don't want to. Just drink when you feel thirsty.".* This updated input 110a may then be used by the machine learning model 210 to create an updated output 220a, in other words, an updated and more aligned answer to the question *"What are the benefits of drinking water".* The process of generating positive and negative examples and updating the input may be repeated several times until an output 300, in this case an answer to the question *"What are the benefits of drinking water",* is provided to the user.

**Figure 3** further zooms in and illustrates the inner workings of the alignment component 230. The aim of the alignment component 230 may be the generation of instructive examples 240 based on the original input 110 and the misaligned output 220. More specifically, the alignment component 230 may receive the original input 110 and the output of the current iteration (e.g., the misaligned output 220) as an input pair 225.

In a first step 331, an embedding function may be used to embed the input pair into an embedding space 331b and obtain an embedded input pair 331a. Moreover, each neighbor of a neighborhood set may be embedded to obtain an embedded neighborhood set. The embedding function used to embed each neighbor of the neighborhood set may be the embedding function that is used for embedding the input pair. In other words, the input pair and each neighbor may be transformed into a numerical representation such as a vector. These numerical representations may capture the intricate patterns that are inherent in the input pair and/or neighbor. Moreover, transforming the input pair and/or neighbor into a numerical representation may enable further processing. The neighbor embedding may not occur at each iteration which may save computational resources.

In a second step 332, the embedded input pair 331a (i.e., the numerical representation of the input pair) may be used to select one or more neighbors 332a. Selected neighbors 332a may be described as one or more pairs of input and output that are similar to the embedded input pair 331a. The neighbors may be selected using a machine learning algorithm such as nearest-neighbor algorithms. Note that the outcome of the machine learning algorithm may be significantly influenced by the embedding of the previous step 331.

In a third step 333, each selected neighbor 332a may be labeled as a positive example or a negative example 333a. A positive example may describe an input and output pair that is in line with the users' expectations. A negative example may describe the opposite, in other words, an input and output pair that the user may not expect or may find to be unsuitable provided the original input 110.

During inference, the labelling may be performed once before starting the inference process (i.e., entering a prompt). Moreover, the labeling may be performed using clustering and/or one or more questionnaires. More specifically, a user may be required to fill in a questionnaire. The neighbors may then be labelled according to the answers provided by the user. For example, a user indicates that answers in English are preferred to answers provided in Dutch. This would label neighbors that comprise answers in Dutch as negative and neighbors that comprise answers in English as positive. In practice, the questionnaire may be more complex. Clustering techniques may be used to improve the efficiency of the labelling. Using techniques such as k-means clustering and hierarchical clustering, similar neighbors may be grouped in clusters and receive the same label. The labeling that is schematically shown in step 333 may not be required during training when using a large training dataset.

The labeled neighbors 333a may be regarded as instructive examples 240. As further described in Figure 2, those instructive examples 240 may be used to create an updated input 110a that is used by the machine learning model 210 to generate a more aligned output 220a. The more aligned output 220a may then serve as the actual output 300 or another iteration may be started to further align the output 220a. In other words, the alignment may be repeated one or more times. Note that the embedding of the neighbors may not be performed during each iteration. During training, the embedding function may be learned and thus updated, which may result in a different embedding at each iteration. In view of computational efficiency, and to maintain a balance between accuracy and efficiency, it may be advantageous not to embed each neighbor of the neighborhood set during each iteration.

Accordingly, for the machine learning alignment agent 200 to work properly, the quality of the instructive examples 240 may be crucial. As described in the previous paragraphs, the quality of those examples 240 may significantly depend on the embedding function 331 and/or the neighbor selection 332 and/or the neighbor labeling 333.

During the training process, the one or more parameters (*θ*) of the embedding function (*ψ* ) of the alignment component 230 may be trained. Mathematically, the generation of an embedded input (*e*) based on an input (t) may be expressed as follows: ${ψ}_{θ} \left(t\right) = e$

Note that those trained parameters (*θ*) indirectly influence the selection of the neighbors (*x*) through the neighbor selection algorithm (*φ*) which may mathematically be represented as follows. Please also note that N represents the actual neighbor selection algorithm such as the nearest neighbor algorithm while *φ* includes the embedding and the selection of the neighbors. ${φ}_{θ} \left(t\right) = N \left({ψ}_{θ}\left(t\right)\right) = \left\{\left.x\right| x is neighbor of e={ψ}_{θ}\left(t\right)\right\}$

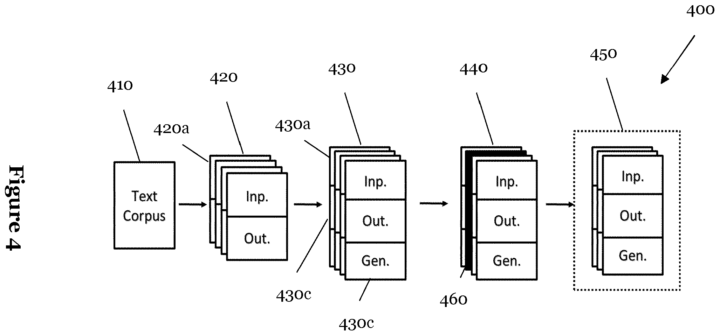

More specifically, the training process may start with the training data that may comprise an input (z), an actual output (*y̅*) and an output generated by the machine learning model (*ỹ*). Figure 4 provides a more detailed description about the process of creating the training data set.

In a subsequent step, the input may be concatenated with the ideal output (z + *y̅*) to obtain an ideal input. Additionally, the input may be concatenated with the generated output (*z* + *ỹ*) to obtain a generated input. The generated input may then be embedded as shown below. Based on the embedded input (*Ẽ*), one or more neighbors may be selected (*S̃*). These neighbors may be labeled as either positive (*S*⁺) or negative (*S*⁻) as follows:
*embedding*: ${E}^{˜} = {ψ}_{θ} \left(z+{y}^{˜}\right)$
*selecting*: ${S}^{˜} = N \left({E}^{˜}\right)$
*labeling*: ${S}^{˜} = {S}^{+} ∪ {S}^{-}$

Training the parameters (*θ*) of the embedding function (*ψ_{θ}*) may comprise minimizing the difference between the ideal output (*y̅*) and the output (*ỹ*) that is generated by the machine learning model using the input (*z*), the generated output (*ỹ*) and the instructive examples 240 (*S⁺, S⁻*) that are provided to the machine learning model in a standard *template* (e.g., *"act more like", "act less like"*)*.*

The above-described steps may be repeated iteratively. In this case, the ideal output (*z* + *y̅*) remains the same, while the actual output (*z* + *ỹ*) may change with each iteration. This may be because the generated output (*ỹ*) converges toward the ideal output (*y̅*) with each iteration. This optimization works, since the instructive examples 240 depend on the parameters (*θ*) of the embedding function (*ψ*₀).

**Figure 4** describes the process 400 of creating the training data that may be used to train the embedding function of the alignment component. The process may begin with a large text corpus 410 such as a collection of newspaper articles.

The text corpus 410 may then be split into input and output pairs 420. For example, the text corpus may comprise the paragraph *"Machine learning (ML)* is *a field of study in artificial intelligence concerned with the development and study of statistical algorithms that can learn from data and generalize to unseen data and thus perform tasks without explicit instructions. Recently, artificial neural networks have been able to surpass many previous approaches in performance.".* This paragraph may, for example, be split into *"Machine learning (ML) is a field of study in artificial intelligence concerned with the development and study of statistical algorithms that can learn from data and generalize to unseen data and thus perform tasks without explicit instructions."* as an input and *"Recently, artificial neural networks have been able to surpass many previous approaches in performance."* as an output. However, splits may also occur in the middle of the sentence or even in the middle of a word.

The inputs 430a of the input and output pairs 420 may then be provided to the machine learning model 210 which generates an output 430c based on the input. The generated output 430c is added to the original input and output pair 420 to create a final training sample. Accordingly, each final training sample consists of an input 430a, an output 430b and a generated output 430c.

A further optional step 440 may be to filter the training samples to obtain a final data set 450 that may be used for training. For example, training samples in which the difference between the quality of the generated output and the quality of the original output is low may be filtered before being used for training. This may improve the training results.

In addition to the training data 450 that is described above, the training process may further require a neighborhood set. The neighborhood set may be described as a collection of samples, wherein one or more samples follow the same format as the input and output pairs 420 (without the generated output 430c). In other words, the samples of the neighborhood set may comprise an input and output. The samples of the neighborhood set may also be referred to as neighbors. The neighborhood data set is preferably a large dataset. The neighborhood set may be based on the set of the training samples 460 that were filtered out in step 440.

A further advantage of the current disclosure may be related to a reduced requirement for training data. More specifically, the current disclosure may achieve results that conventional methods may only achieve by using a significantly larger training set.

Using conventional alignment techniques such as Supervised Fine-Tuning (SFT) may typically require around 10,000-20,000 high-quality samples. These samples must be carefully curated and annotated, often requiring domain experts to ensure responses are accurate, nuanced, and aligned with specific behaviors, particularly in specialized fields like medicine, law, or finance. The process may involve multiple validation stages and quality checks to prevent errors. Moreover, domain-specific knowledge may be required, as only highly skilled annotators can deliver the precision needed. Additionally, if initial outcomes are unsatisfactory or alignment needs shift over time, the dataset may need to be expanded or revised. This may require the collection of additional samples and the performance of further validation to maintain alignment standards. Therefore, when using conventional methods, alignment may typically be conducted as a single, universal step to serve a broad customer base, rather than tailoring it individually. Aligning models for each customer's unique preferences or specifications would require extensive, customer specific datasets. In contrast, the approach of the current disclosure may enable alignment without the extensive need for training data.

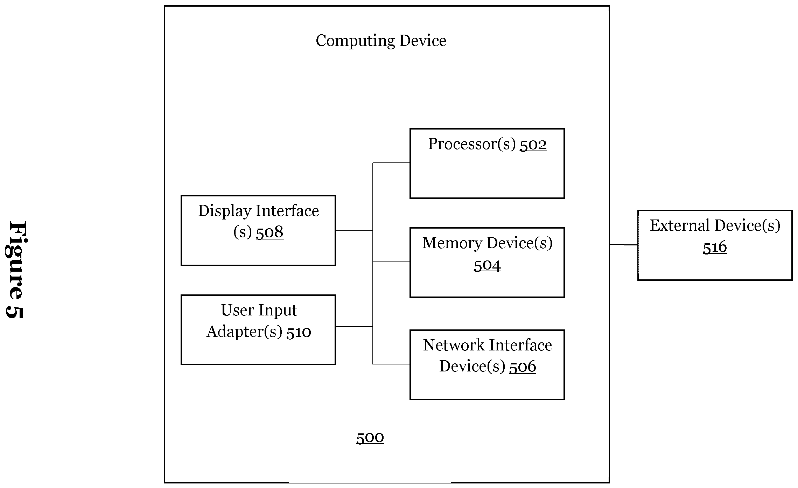

**Figure 5** is a block diagram of an example computing device 500 (which may also be referred to, for example, as a "computing device," "computer system," or "computing system") according to some embodiments.

In some embodiments, the computing device 500 includes one or more of the following: one or more processors 502 (which may be referred to as "hardware processors" or individually as a "hardware processor"); one or more memory devices 504; one or more network interface devices 506; one or more display interfaces 508; and one or more user input adapters 510. Additionally, in some embodiments, the computing device 500 is connected to or includes a display device, input devices, etc. These elements (e.g., the processors 502, memory devices 504, network interface devices 506, display interfaces 508, user input adapters 510) are hardware devices (for example, electronic circuits or combinations of circuits) that are configured to perform various different functions for the computing device 500. In some embodiments, these components of the computing device 500 may be collectively referred to as computing resources (e.g., resources that are used to carry out execution of instructions and include the processors (one or more processors 502), storage (one or more memory devices 504), and I/O (network interface devices 506, one or more display interfaces 508, and one or more user input adapters 510).

In some instances, the term processing resources may be used interchangeably with the term computing resources. In some embodiments, multiple instances of computing device 500 may arranged into a distributed computing system. Computing device 500 may be configured to communicate with one or more external devices 516. External devices 516 can be other instances of computing device or may be different (e.g., just storage devices, sensors, etc.). In some examples, computing device 500 includes multiple computing devices 500. As an example, a computing device 500 includes different architectures that may be used in cloud computing environments.

In some embodiments, each or any of the processors 502 is or includes, for example, a single- or multi-core processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 502 uses an instruction set architecture such as x86 or Advanced RISC Machine (ARM).

In some embodiments, each or any of the memory devices 504 is or includes a random access memory (RAM) (such as a Dynamic RAM (DRAM) or Static RAM (SRAM)), a flash memory (based on, e.g., NAND or NOR technology), a hard disk, a magneto-optical medium, an optical medium, cache memory, a register (e.g., that holds instructions), or other type of device that performs the volatile or non-volatile storage of data and/or instructions (e.g., software that is executed on or by processors 502). Memory devices 504 are examples of non- transitory computer-readable storage media.

In some embodiments, each or any of the network interface devices 506 includes one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, WiFi (IEEE 802.11), GSM, CDMA2000, UMTS, LTE, LTE-Advanced (LTE-A), LTE Pro, Fifth Generation New Radio (5G NR) and/or other short-range, mid-range, and/or long-range wireless communications technologies).

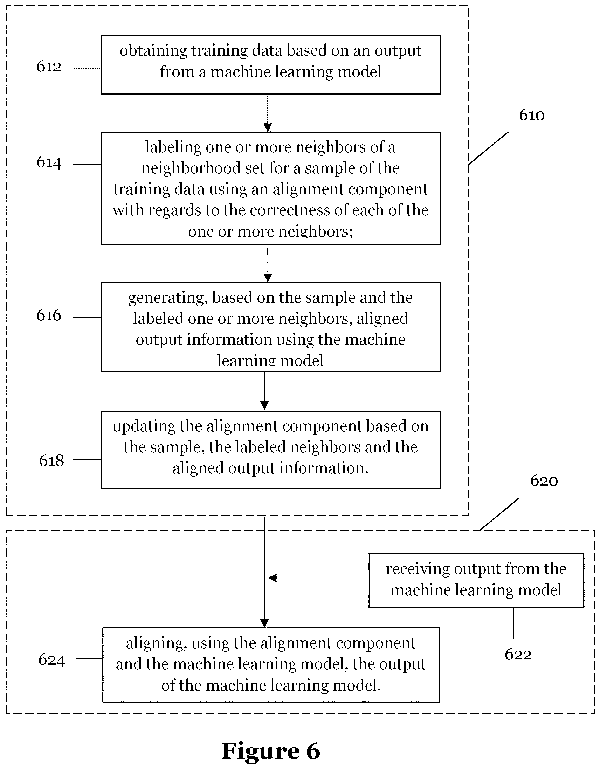

**Figure 6** illustrates a flow diagram of the training process 610 and of the inference process 620 which is based on the trained machine learning model.

More specifically, Figure 6 shows a computer-implemented method 610 for training an alignment component to align the output of a machine learning model. The method comprises step 612 of obtaining training data based on an output from the machine learning model. The method further comprises step 614 of labeling one or more neighbors of a neighborhood set for a sample of the training data using the alignment component with regards to the correctness of each of the one or more neighbors. The method further comprises step 616 of generating, based on the sample and the labeled one or more neighbors, aligned output information using the machine learning model. Finally, the method comprises step 618 of updating the alignment component based on the sample, the labeled neighbors and the aligned output information.

Moreover, Figure 6 shows a computer-implemented method 620 for using a machine learning model and an alignment component to align the output of the machine learning model, wherein the alignment component has been trained according to the method of any one of embodiments 1 to 8 of the current disclosure. The method comprises step 624 of receiving output from the machine learning model and step 624 of aligning, using the alignment component and the machine learning model, the output of the machine learning model.

Terms and phrases used in this document, and variations thereof, unless otherwise expressly stated, should be construed as open-ended rather than limiting. As examples of the foregoing: "and/or" includes any and all combinations of one or more of the associated listed items (e.g., a and/or b means a, b, or a and b); the singular forms "a", "an", and "the" should be read as meaning "at least one," "one or more," or the like; the term "example", which may be used interchangeably with the term embodiment, is used to provide examples of the subject matter under discussion, not an exhaustive or limiting list thereof; the terms "comprise" and "include" (and other conjugations and other variations thereof) specify the presence of the associated listed elements but do not preclude the presence or addition of one or more other elements; and if an element is described as "optional," such description should not be understood to indicate that other elements, not so described, are required.

As used herein, the term "non-transitory computer-readable storage medium" includes a register, a cache memory, a ROM, a semiconductor memory device (such as D-RAM, S-RAM, or other RAM), a magnetic medium such as a flash memory, a hard disk, a magneto-optical medium, an optical medium such as a CD-ROM, a DVD, or Blu-Ray Disc, or other types of volatile or non-volatile storage devices for non-transitory electronic data storage. The term "non-transitory computer-readable storage medium" does not include a transitory, propagating electromagnetic signal. Computer programs described herein may be stored on a non-transitory computer-readable storage medium.

The claims are not intended to invoke means-plus-function construction/ interpretation unless they expressly use the phrase "means for" or "step for." Claim elements intended to be construed/interpreted as means-plus-function language, if any, will expressly manifest that intention by reciting the phrase "means for" or "step for"; the foregoing applies to claim elements in all types of claims (method claims, apparatus claims, or claims of other types) and, for the avoidance of doubt, also applies to claim elements that are nested within method claims. Consistent with the preceding sentence, no claim element (in any claim of any type) should be construed/interpreted using means plus function construction/interpretation unless the claim element is expressly recited using the phrase "means for" or "step for."

Although various embodiments have been shown and described in detail, the claims are not limited to any particular embodiment or example. None of the above description should be read as implying that any particular element, step, range, or function is essential. All structural and functional equivalents to the elements of the above-described embodiments that are known to those of ordinary skill in the art are expressly incorporated herein by reference and are intended to be encompassed. Moreover, it is not necessary for a device or method to address each and every problem sought to be solved by the present invention, for it to be encompassed by the invention. No embodiment, feature, element, component, or step in this document is intended to be dedicated to the public.

Embodiments of the present disclosure may be realized in any of various forms, e.g., in software. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

### List of reference signs

- 100: alignment scenario
- 110: original input
- 110a: updated input
- 200: ML alignment agent
- 210: machine learning model
- 220: unaligned output
- 220a: more aligned output
- 225: input pair
- 230: alignment component
- 300: aligned output
- 331: embedding
- 331a: embedded input
- 331b: embedding space
- 332: neighbor selection
- 332a: selected neighbor
- 333: neighbor labeling
- 333a: labeled neighbors
- 400: training dataset creation process
- 410: text corpus
- 420: input and output pair
- 420a, 430a: input
- 430b: ideal output
- 430c: generated output
- 440: filtering step
- 450: final training data set
- 460: possible neighborhood set
- 500: computing device
- 502: processor(s)
- 504: memory device(s)
- 506: network interface device(s)
- 508: display interface(s)
- 510: user input adapter(s)
- 516: external device(s)
- 610: method for training
- 612: obtaining training data
- 614: labeling one or more neighbors
- 616: generating aligned output
- 618: updating alignment component
- 620: method for use
- 622: receiving output
- 624: aligning output

## Claims

1. A computer-implemented method for training an alignment component to align the output (300) of a machine learning model (210), comprising the steps of:
obtaining training data based on an output from the machine learning model (210);
labeling one or more neighbors of a neighborhood set for a sample of the training data using the alignment component with regards to the correctness of each of the one or more neighbors;
generating, based on the sample and the labeled one or more neighbors, aligned output information using the machine learning model (210); and
updating the alignment component based on the sample, the labeled neighbors and the aligned output information.

2. The method of the preceding claim, further comprising the steps of:
embedding the sample into an embedding space using the alignment component;
embedding each neighbor of the neighborhood set into the embedding space using the alignment component; and
selecting one or more neighbors to be labelled.

3. The method of the preceding claim, further comprising:
iteratively repeating the sample embedding, neighbor embedding, selecting, labeling, generating, and updating, wherein the neighbor embedding is preferably not performed during each iteration.

4. The method of the preceding claim, wherein the iteratively repeating is stopped when a predefined number of runs as has been reached; or
wherein the iteratively repeating is stopped when a predefined number of neighbors are positive.

5. The method of any of the preceding claims, wherein each of the one or more neighbors is labelled as positive or negative.

6. The method of any one of the preceding claims, wherein each neighbor is a data point that lies in the proximity of the sample.

7. The method of any one of the preceding claims, wherein obtaining training data comprises:
obtaining text information;
splitting the text information into a plurality of training samples, comprising input and ideal output information;
generating, based on the input information and using the machine learning model, generated output information;
wherein the training data comprises the input information, the ideal output information and the generated output information.

8. The method of the preceding claim, further comprising:
filtering the obtained training data based on the quality of the generated output information.

9. A computer-implemented method for using a machine learning model and an alignment component to align the output of the machine learning model, wherein the alignment component has been trained according to the method of any one of the preceding claims, the method comprising:
receiving output from the machine learning model (210);
aligning, using the alignment component and the machine learning model, the output of the machine learning model.

10. The method of the preceding claim, wherein aligning comprises labeling each neighbor of the neighborhood set once.

11. The method of any one of claims 9 or 10, wherein the labeling is based on clustering and/or wherein the labeling is based on a questionnaire.

12. The method of any one of claims 9 to 11, further comprising:
inputting information (110) into the machine learning model (210);
generating, based on the inputting, output information (300) wherein the output information is aligned according to the methods of any one of claims 9 to 11.

13. An alignment component which has been trained according to the methods of any one of claims 1 to 8.

14. A device or system comprising means for performing the methods of any one of claims 1 to 12.

15. A computer program comprising instructions which, when the program is executed by a computer, cause the computer to carry out the methods of any one of claims 1 to 12.
